# EUROPEAN PATENT APPLICATION

(11) **EP 4 086 824 A1**
(43) Date of publication of application: **09.11.2022**
(21) Application number: 20910677.2
(22) Date of filing: 23.12.2020
(51) Int. Cl.: G06Q 10/06, G06Q 10/10

(54) **METHOD FOR AUTOMATICALLY UPDATING UNIT COST OF INSPECTION BY USING COMPARISON BETWEEN INSPECTION TIME AND WORK TIME OF CROWDSOURCING-BASED PROJECT FOR GENERATING ARTIFICIAL INTELLIGENCE TRAINING DATA**

(30) Priority: 03.01.2020 KR 20200000616
(71) Applicant: Crowdworks, Inc., Seoul 06134 (KR)
(72) Inventor: PARK, Min Woo, Seongnam-si, Gyeonggi-do 13626 (KR); KIM, Ju Yeong, Suwon-si, Gyeonggi-do 16509 (KR)
(74) Representative: dompatent von Kreisler Selting Werner - Partnerschaft von Patent- und Rechtsanwälten mbB
(86) International application number: PCT/KR2020/019042
(87) International publication number: WO 2021/137523

(57) **Abstract**

Provided is a method for automatically updating the unit cost of inspection by using a comparison between inspection time and work time of a crowdsourcing-based project for generating artificial intelligence training data. The method comprises the steps of: determining the unit cost of work and the unit cost of inspection of a new crowdsourcing-based project; opening the new crowdsourcing-based project by applying the unit cost of work and the unit cost of inspection; measuring work time and inspection time for each work datum during a predetermined period; calculating the ratio of the inspection time to the work time for each work datum; calculating the average value of the ratio of the inspection time to the work time calculated for each work datum; and automatically updating the unit cost of inspection by using the unit cost of work and the calculated average value.

## Description

### [TECHNICAL FIELD]

Embodiments of the inventive concept described herein relate to generating artificial intelligence training data, and more particularly, relate to a method for automatically updating a unit cost of inspection by using a comparison between an inspection time and a work time of a crowdsourcing-based project.

### [BACKGROUND ART]

Recently, there has been an increase in companies which collect and process a large amount of data based on crowdsourcing, which allow the general public to participate in some course of business activity. In other words, a company opens one project to allow the general public, that is, workers and inspectors to participate in the corresponding project, such that the workers perform works and the inspectors perform inspections, thus collecting necessary information (result data). Thus, the company pays a cost of work according to a predetermined unit cost of work to the worker and pays a cost of inspection according to a predetermined unit cost of inspection to the inspector.

At this time, because it is possible to measure the unit cost of work in advance by means of a pilot project or by means of simulation based on a type, a difficulty, or the like of the project, workers may be paid a relatively accurately calculated cost of work in response to the work performed by each worker.

On the other hand, because it is difficult to predict capabilities of workers, which affect the unit cost of inspection, capabilities of inspectors, work quality according to capability of the worker, a return rate according to the capability of the worker, and the like, a predetermined unit cost of inspection is inaccurate. Thus, there is a problem in which inspectors may be paid a cost of inspection calculated differently from the inspection performed by each inspector.

Furthermore, because capabilities of workers, which affect the unit cost of inspection, capabilities of inspectors, work quality according to capability of the worker, a return rate according to the capability of the worker, and the like are continuously changed while the project is in progress, it is suitable to measure a unit cost of inspection in real time or every period while the project is in progress without determining the unit cost of inspection in advance before the project is opened.

### [DETAILED DESCRIPTION OF THE INVENTION]

### [TECHINICAL PROBLEM]

Embodiments of the inventive concept provide a method for automatically updating a unit cost of inspection by using a comparison between an inspection time and a work time of a crowdsourcing-based project.

The technical problems to be solved by the inventive concept are not limited to the aforementioned problems, and any other technical problems not mentioned herein will be clearly understood from the following description by those skilled in the art to which the inventive concept pertains.

### [TECHNICAL SOLUTION]

According to an embodiment, a method for automatically updating a unit cost of inspection by using a comparison between an inspection time and a work time of a crowdsourcing-based project may include determining a unit cost of work and a unit cost of inspection in a new crowdsourcing-based project, applying the unit cost of work and the unit cost of inspection to open the new crowdsourcing-based project, measuring a work time and an inspection time for each piece of work data during a certain period, calculating the ratio of the inspection time to the work time for each piece of work data, calculating an average value of the ratio of the inspection time to the work time calculated for each piece of work data, and automatically updating the unit cost of inspection using the unit cost of work and the calculated average value.

In some embodiments of the inventive concept, the determining of the unit cost of work may include identifying a plurality of function tools to be applied to work data of the new crowdsourcing-based project, extracting history information of a previous crowdsourcing-based project in which the plurality of function tools are used, calculating respective working times when the plurality of function tools are used, based on the history information, estimating a work time for each one piece of work data of the new crowdsourcing-based project using the sum of the respective work times when the plurality of function tools are used, and determining the unit cost of work using the estimated work time.

In some embodiments of the inventive concept, the history information may include at least one of a total work time when the corresponding function tool is used in the previous crowdsourcing-based project, the total number of works, an average work time, the number of returns, a work time of returned work data, and a work time considering the number of the returns.

In some embodiments of the inventive concept, the work time when the function tool is used may be measured using a start time when the corresponding function tool is used and an end time when the corresponding function tool is used.

In some embodiments of the inventive concept, the work time of the returned work data may be calculated using the product of the number of the returns and the average work time.

In some embodiments of the inventive concept, the work time considering the number of the returns may be calculated using the sum of the total work time and the work time of the returned work data.

In some embodiments of the inventive concept, when the previous crowdsourcing-based project in which a specific function tool is used is n (where n is a natural number) in number, the work time when the specific function tool is used may be calculated using a value (a/b) obtained by dividing the sum (a) of work times considering the number of returns of the n previous crowdsourcing-based projects by the sum (b) of the total number of works of the n previous crowdsourcing-based projects.

In some embodiments of the inventive concept, the determining of the unit cost of work using the estimated working time may include estimating the number of work data capable of being performed per hour in the new crowdsourcing-based project using the estimated work time and determining the unit cost of work using a value obtained by dividing a standard wage per hour by the estimated number of the work data capable of being performed per hour.

In some embodiments of the inventive concept, the method may further include calculating the ratio of the unit cost of inspection to the unit cost of work. The automatic updating of the unit cost of inspection may include automatically updating the unit cost of inspection, when a deviation between the average value of the ratio of the inspection time to the work time and the ratio of the unit cost of inspection to the unit cost of work deviates from a reference numerical range.

According to an embodiment, a computer program may be combined with a computer which is hardware and may be stored in a computer-readable storage medium to execute the method for automatically updating the unit cost of inspection by using the comparison between the inspection time and the work time of the crowdsourcing-based project.

The other details of the inventive concept may be included in the detailed description and the drawings.

### [ADVANTAGEOUS EFFECTS OF THE INVENTION]

The above inventive concept may measure a unit cost of inspection in which a progress situation of the project is reflected every certain period using the work time and the inspection time calculated every certain period, because capabilities of workers, capabilities of inspectors, and work quality and return rates according to the capabilities differ from each other per hour even for the same project.

Furthermore, the above inventive concept may update and apply a unit cost of inspection every certain period in response to a progress situation of the project to accurately pay a cost of inspection to correspond to the inspection performed by each of inspectors, thus efficiently performing cost management.
The effects of the inventive concept are not limited to the above-described effects and other effects which are not described herein will become apparent to those skilled in the art from the following description.

### [DESCRIPTION OF THE DRAWINGS]

The above and other objects and features will become apparent from the following description with reference to the following figures, wherein like reference numerals refer to like parts throughout the various figures unless otherwise specified, and wherein:
FIG. 1 is a conceptual diagram of a crowdsourcing service according to an embodiment of the inventive concept;
FIG. 2 is a signal sequence diagram for describing a progress process in a crowdsourcing-based project according to an embodiment of the inventive concept;
FIG. 3 is a flowchart of a method for automatically updating a unit cost of inspection by using a comparison between an inspection time and a work time of a crowdsourcing-based project according to an embodiment of the inventive concept;
FIG. 4 is a flowchart of a method for determining a unit cost of work when opening a project according to an embodiment of the inventive concept;
FIG. 5 is a drawing for describing a work of a project applying a plurality of function tools according to an embodiment of the inventive concept;
FIG. 6 is a drawing for describing extracting history information of a previous project where each function tool applied to a new crowdsourcing-based project is used according to an embodiment of the inventive concept;
FIGS. 7, 8, and 9 are drawings for describing calculating a work time for each function tool according to an embodiment of the inventive concept;
FIG. 10 is a drawing illustrating that a plurality of pieces of work data assigned to a project are performed in order according to an embodiment of the inventive concept;
FIG. 11 is a drawing for describing calculating an average value of the ratio of an inspection time to a work time every certain period according to an embodiment of the inventive concept;
FIG. 12 is a drawing for describing updating a unit cost of inspection every certain period using an average value of the ratio of an inspection time to a work time according to an embodiment of the inventive concept; and
FIG. 13 is a block diagram of an apparatus for automatically updating a unit cost of inspection by using a comparison between an inspection time and a work time of a crowdsourcing-based project according to an embodiment of the inventive concept.

### [BEST MODE]

Advantages, features, and methods of accomplishing the same in the inventive concept will become apparent with reference to embodiments described in detail below together with the accompanying drawings. The inventive concept, however, may be embodied in various different forms, and should not be construed as being limited only to the illustrated embodiments. Rather, these embodiments are provided as examples so that the inventive concept will be thorough and complete, and will fully convey the scope of the inventive concept to those skilled in the art. The inventive concept may be defined by the scope of the claims.

The terms used herein are provided to describe embodiments, not intended to limit the inventive concept. In the specification, the singular forms include plural forms unless particularly mentioned. The expressions "comprise" and/or "comprising" used herein indicate existence of one or more other elements other than stated elements but do not exclude presence of additional elements. Like reference numerals designate like elements throughout the specification, and the term "and/or" may include each of stated elements and one or more combinations of the stated elements. The terms such as "first" and "second" are used to describe various elements, but it is obvious that such elements are not restricted to the above terms. The above terms are used only to distinguish one element from the other. Thus, it is obvious that a first element described hereinafter may be a second element within the technical scope of the inventive concept.

Unless otherwise defined, all terms (including technical and scientific terms) used herein have the same meaning as commonly understood by those skilled in the art to which the inventive concept pertains. Also, terms which are defined in a dictionary and commonly used should be interpreted as not in an idealized or overly formal detect unless expressly so defined.

Hereinafter, an embodiment of the inventive concept will be described in detail with reference to the accompanying drawings.

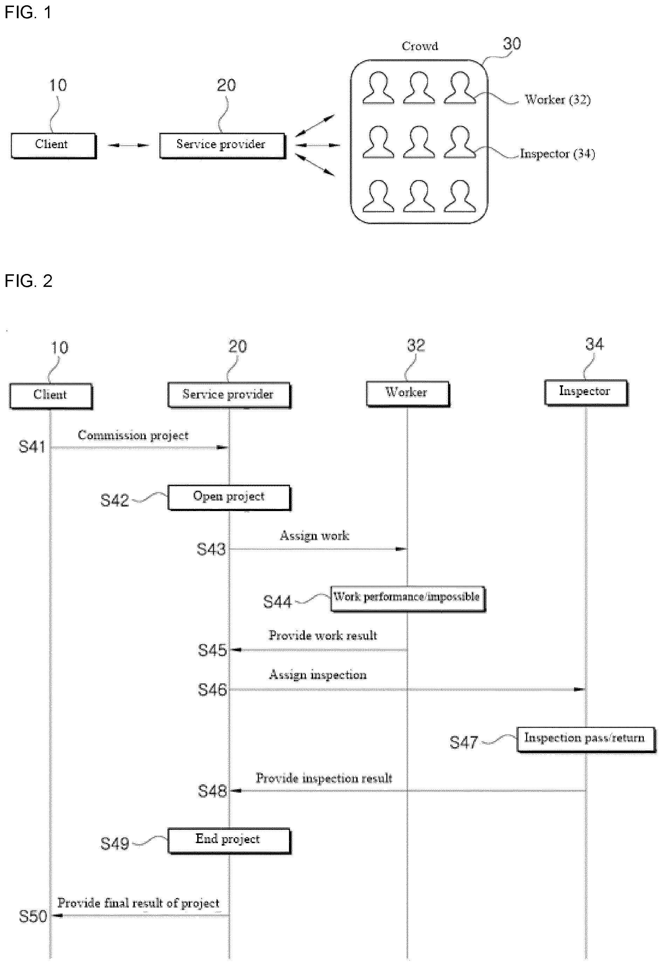

FIG. 1 is a conceptual diagram of a crowdsourcing service according to an embodiment of the inventive concept.

Referring to FIG. 1, the crowdsourcing service may be performed by being composed of a client 10, a service provider 20, and a crowd 30.

The client 10 may refer to a company or an individual who commissions a crowdsourcing-based project (hereinafter, a project).

The client 10 may commission the project for the purpose of source data collection, data annotation, or the like for creating artificial intelligence learning data. The data created by means of the project may be used as learning data of any machine learning such as supervised learning, unsupervised learning, or reinforcement learning. The source data collection may refer to collecting raw data, for example, collecting a recorded voice or collecting a photo. The data annotation may refer to inputting annotation data associated with source data such as text, a photo, or a video. For example, the data annotation may be, but is not limited to, finding an entity from a given text, finding a similar sentence, or the like. Meanwhile, a type of the above-mentioned project is only an embodiment, and various projects may be handled in the inventive concept according to a design of the client 10.

The service provider 20 may refer to a company which provides the crowdsourcing service.

When the service provider 20 is commissioned for a project for a product or a service from the client 10, it may assign a work for the corresponding project to the crowd 30 and may receive a work result from the crowd 30. Thereafter, the service provider 20 may provide the client 10 with a final product extracted based on the work result.

At this time, the service provider 20 may provide the client 10 and the crowd 30 with the crowdsourcing service by means of a crowdsourcing platform (hereinafter, a platform). In other words, when the service provider 20 is commissioned for the project from the client 10, it may open the project on the platform. Thereafter, when receiving the work result of the opened project from the crowd 30, the service provider 20 may end the corresponding project on the platform and may extract and provide the final product to the client 10.

The crowd 30 may refer to the general public who participates in the project opened on the platform. Herein, the crowd 30 may participate in project opened on the platform by means of an application or a website provided by the service provider 20.

The crowd 30 may be composed of a worker 32 and an inspector 34.

The worker 32 may determine to participate in a specific project among a plurality of projects opened on the platform. Thereafter, the worker 32 may perform a work such as source data collection or data annotation and may transmit it to the platform.

The inspector 34 may determine to participate in the specific project among the plurality of projects opened on the platform. Thereafter, the inspector 34 may perform an inspection for the work result performed by the worker 32. The inspector 34 may perform inspection pass processing or return processing, as a result of performing the inspection, and may input a reason for the return when returning the work. When passing the inspection, because there is no need for re-work and re-inspection due to the re-work, the inspection pass may have the same meaning as completion of the inspection.

FIG. 2 is a signal sequence diagram for describing a progress process in a crowdsourcing-based project according to an embodiment of the inventive concept.

First of all, in operation S41, a client 10 may commission one or more projects to a service provider 20.

Thereafter, in operation S42, the service provider 20 may open the commissioned project on a platform. At this time, before opening the project, the service provider 20 may determine a grade with regard to a difficulty of the corresponding project or the like. In other words, the service provider 20 may determine whether to expose the corresponding project to a crowd 30 of a certain grade or more depending on the difficulty. Thus, the service provider 20 may enhance the reliability of the work result of the project.

Thereafter, in operation S43, the service provider 20 may assign a work to a worker 32 of the grade or more depending on the grade of the project.

Thereafter, in operation S44, the worker 32 may perform the assigned work. At this time, the worker 32 may fail to perform the work it is impossible to perform for some reason and may input a reason why it is impossible to perform the work.

Thereafter, in operation S45, the service provider 20 may receive a work result from the worker 32. In operation S46, the service provider 20 may assign an inspection for the corresponding work result to an inspector 34.

Thereafter, in operation S47, the inspector 34 may perform the assigned inspection. At this time, when it is determined that the work is correctly performed, the inspector 34 may determine that the inspection is completed. When it is determined that the inspection work is incorrectly performed, the inspector 34 may determine return. When determining the return, the inspector 34 may input a reason for the return about whether it is determined that the work is incorrectly performed for a certain reason.

Thereafter, in operation S48, the service provider 20 may receive the inspection result from the inspector 34.

When the inspection result is the completion of the inspection, the service provider 20 may extract a final product when the project is ended, based on it, by using the corresponding work result as valid data.

When the inspection result is return processing, the service provider 20 may internally perform an inspection again or may assign a work to the worker 32 again such that the worker 32 performs the work.

Thereafter, when the project duration is ended or when ensuring sufficient valid data, in operation S49, the service provider 20 may end the corresponding project. In operation S50, the service provider 20 may calculate final result data based on the ensured valid data and may provide the client 10 with the final result data.

At this time, before ending the project, the service provider 20 may evaluate the results performed by the worker 32 and the inspector 34 and may calculate the cost of work and the cost of inspection depending on the evaluation to pay the worker 32 and the inspector 34 the cost of work and the cost of inspection.

Meanwhile, components are simply represented as the client 10, the service provider 20, the worker 32, and the inspector 34 in FIGS. 1 and 2, but they may refer to computer devices or electric communication devices such as a smartphone, a tablet, a PDA, a laptop, a desktop, and a server operated by each participant.

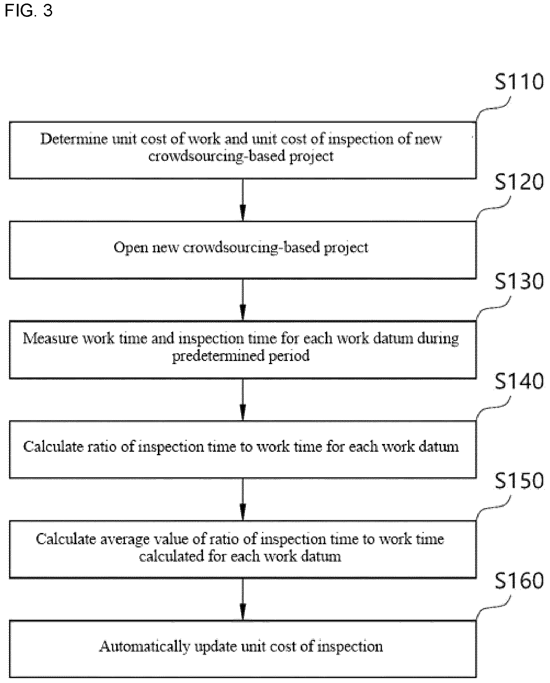

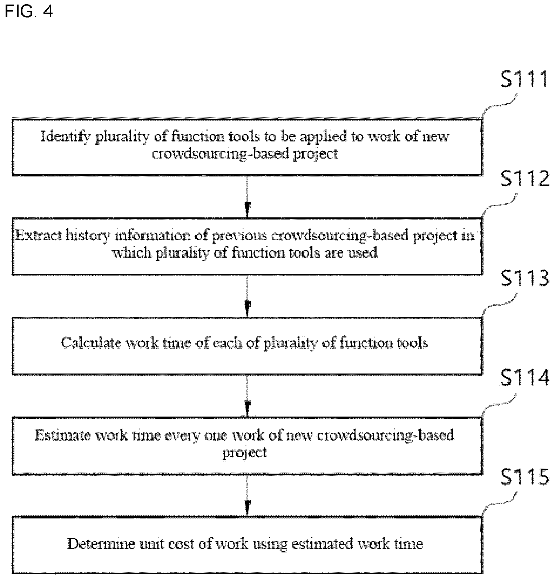

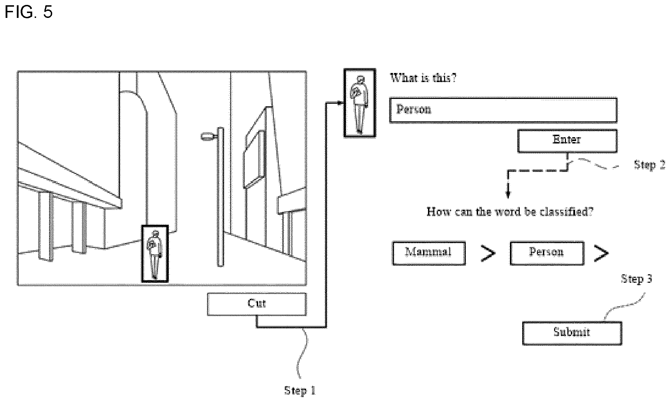

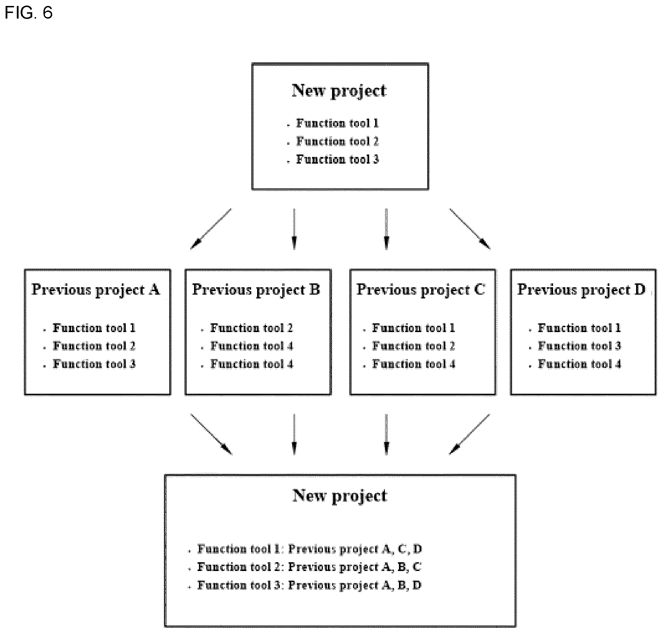

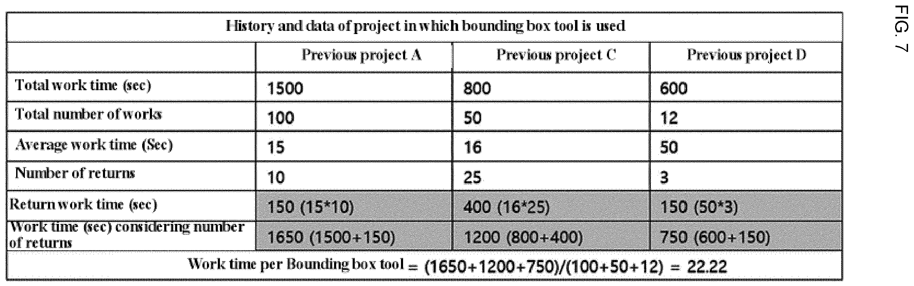

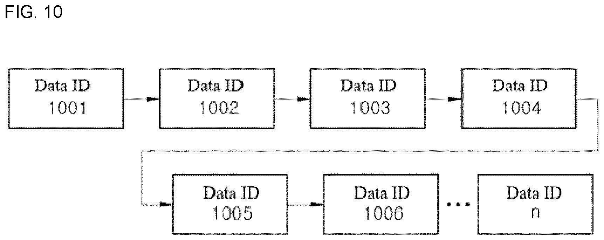

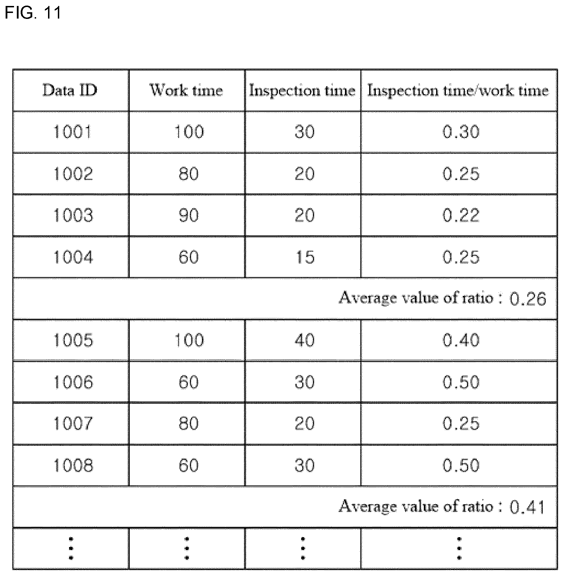

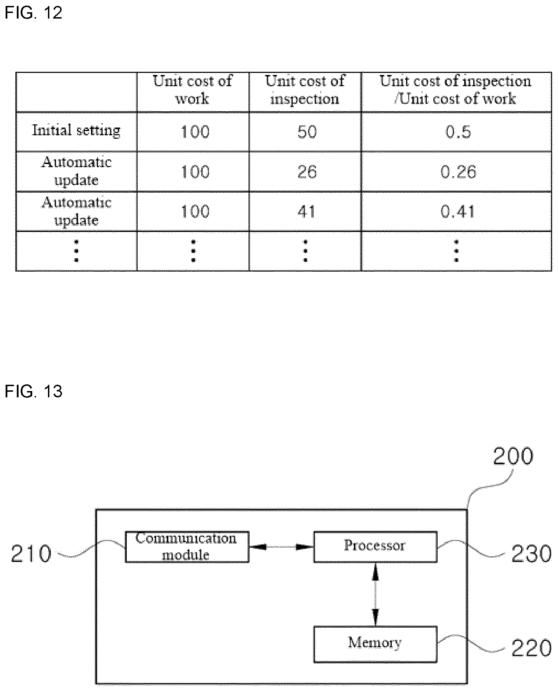

FIG. 3 is a flowchart of a method for automatically updating a unit cost of inspection by using a comparison between an inspection time and a work time of a crowdsourcing-based project according to an embodiment of the inventive concept. FIG. 4 is a flowchart of a method for determining a unit cost of work when opening a project according to an embodiment of the inventive concept. FIG. 5 is a drawing for describing a work of a project applying a plurality of function tools according to an embodiment of the inventive concept. FIG. 6 is a drawing for describing extracting history information of a previous project where each function tool applied to a new crowdsourcing-based project is used according to an embodiment of the inventive concept. FIGS. 7 to 9 are drawings for describing calculating a work time for each function tool according to an embodiment of the inventive concept. FIG. 10 is a drawing illustrating that a plurality of pieces of work data assigned to a project are performed in order according to an embodiment of the inventive concept. FIG. 11 is a drawing for describing calculating an average value of the ratio of an inspection time to a work time every certain period according to an embodiment of the inventive concept. FIG. 12 is a drawing for describing updating a unit cost of inspection every certain period using an average value of the ratio of an inspection time to a work time according to an embodiment of the inventive concept.

Meanwhile, operations shown in FIGS. 3 and 4 may be understood as being performed by a platform server (hereinafter, a server) operated by a service provider 20, but not limited thereto.

Furthermore, a worker 32 or an inspector 34 may perform a work or an inspection using a certain terminal device. The terminal device of the worker 32 or the inspector 34 may be, but is not limited to, a computer device or an electric communication device such as a smartphone, a tablet, a PDA, a laptop, or a desktop.

Referring to FIG. 3, in operation S110, the server may determine a unit cost of work and a unit cost of inspection in a new crowdsourcing-based project.

The server may set a fixed unit cost of work and an initial unit cost of inspection in advance in the crowdsourcing-based project to be newly opened. In other words, the unit cost of work may be fixed and applied as one value until the project is opened and ended. An initial value of the unit cost of inspection may be set before the project is opened, and the unit cost of inspection may be updated to an appropriate value according to a project situation every certain period when the project is opened. A detailed description will be given below of the method for determining the unit cost of work and the method for updating the unit cost of inspection every certain period.

Of course, in an embodiment, the unit cost of work may be updated and changed every certain period without being fixed. Even at this time, the unit cost of inspection may be updated in the same manner by applying an R value described below to the unit cost of work.

Furthermore, the server may set the certain period when the unit cost of inspection is automatically updated in advance before the project is opened.

As an embodiment, the certain period may be set to a specific time. For example, when the certain period is set to 3 hours, the unit cost of inspection may be automatically updated every 3 hours until the project is ended.

As another embodiment, the certain period may be a time point when the work and the inspection of a specific number of work data are completed. For example, when the certain period is set to four, the unit cost of inspection may be automatically updated whenever the work of four pieces of work data is completed by a worker after the project is opened and the inspection is completed by an inspector.

Hereinafter, a description will be given in detail of determining the unit cost of work.

Referring to FIG. 4, in operation S111, the server may identify a plurality of function tools applied to a work of a new crowdsourcing-based project scheduled to open. In other words, the server should identify what a function tool used to perform the work of the new crowdsourcing-based project is.

As an embodiment, the work of the project may be completed by means of a plurality of function works. In other words, workers who participate in the project may complete one work by performing a plurality of steps. Referring to FIG. 5, a worker should perform step 1, step 2, and step 3 to perform a work of the corresponding project.

In detail, the worker 32 may select a specific object from a specific image and may perform step 1, that is, a bounding work. At this time, the worker 32 may use a bounding box tool to perform the bounding work.

Thereafter, the worker 32 may enter a name of the selected specific object and may perform step 2, that is, a transcription work. At this time, the worker 32 may use an input box tool to perform the transcription work.

Thereafter, to classify a type of the specific object to which the name is assigned, the worker 32 may select a high-level concept including the word entered in the transcription work and may perform step 3, that is, a property classification work. At this time, the worker 32 may use a make step tool to perform the property classification work.

Thereafter, in operation S112, the server may extract history information of a previous crowdsourcing-based project in which the corresponding function tool is used, with respect to each of the plurality of function tools. For example, when function tool 1, function tool 2, and function tool 3 are used in the new crowdsourcing-based project, the server may extract projects in which function tool 1, function tool 2, or function tool 3 is used among projects which are previously performed. Thereafter, the server may extract history information of previous projects which are used for each function tool.

Referring to FIG. 6, when function tool 1, function tool 2, and function tool 3 are applied to the new crowdsourcing-based project scheduled to open, the server may extract projects to which function tool 1, function tool 2, or function tool 3 is applied among projects which are previously performed. For example, it is assumed that previous project A applies function tool 1, function tool 2, and function tool 3, that previous project B applies function tool 2, function tool 3, and function tool 4, that previous project C applies function tool 1, function tool 2, and function tool 4, and that previous project D applies function tool 1, function tool 3, and function tool 4.

Thus, history information of previous project A, previous project C, and previous project D may be extracted for function tool 1 applied to the new crowdsourcing-based project, history information of previous project A, previous project B, and previous project C may be extracted for function tool 2, and history information of previous project A, previous project B, and previous project D may be extracted for function tool 3.

Referring to FIG. 4, in operation S113, the server may calculate each work time when the plurality of function tools are used, based on the previous project history information. Herein, the previous project history information may include at least one of a total work time when the corresponding function tool is used in the previous project, the total number of works, an average work time, the number of returns, a work time of returned work data, and a work time considering the number of the returns. The server may calculate a work time for each function tool using the previous project history information.

In detail, the work time when the function tool is used may be generated based on information about an accumulated time when the corresponding tool is used by the plurality of workers until the previous project is opened and ended, the number of work data completed until the previous project is opened and ended, an average work time according to it, the number of work data returned during a work, a re-work time for the returned work data, or a work time considering the re-work time.

At this time, the total work time may be generated as a start time when the specific function tool is used in the previous project and an end time when the specific function tool is used in the previous project are recorded, which may refer to a total time obtained by adding times when the plurality of workers who participate in the previous project use the corresponding tool. Furthermore, the total number of works may refer to the number of final work result data provided by the plurality of workers. Furthermore, the number of the returns may refer to the number of times that work data submitted by the worker is returned by a project manager or an inspector while the project is in progress. At this time, the worker may rework the returned work data and may submit the work data again.

As an embodiment, the average work time (sec) may refer to a value obtained by dividing the total work time (sec) by the total number of works, the work time (sec) of the returned work data may refer to a value obtained by multiplying the number of returns by the average work time (sec), and the work time (sec) considering the number of returns may refer to a value obtained by adding the total work time (sec) and the work time (sec) of the returned work data.

Thus, the work time (sec) per function tool may be calculated by dividing the work time (sec) considering the number of returns by the total number of works. At this time, when the previous project in which the specific function tool is used is n (where n is a natural number) in number, the work time when the specific function tool is used may be calculated by dividing a value, obtained by adding a work time considering the number of n returns, by a value obtained by adding the total number of n works.

As an embodiment, the new crowdsourcing-based project may include a bounding box tool for a bounding work, an input box tool for a transcription work, and a make step tool for a property classification work as the used function tools.

Referring to FIG. 7, history information of previous project A, previous project C, and previous project D for the bounding box tool may be extracted.

In previous project A, when the total work time when the bounding box tool is used is 1500 sec. and when the total number of works is 100, the average work time is 15 sec. Furthermore, because the number of returns is 10, the work time of the returned work data is 150 sec. which are a value obtained by multiplying the average work time by the number of the returns. Thus, the total work time using the bounding box tool in previous project A (i.e., the work time considering the number of returns) is 1650 sec.

Furthermore, in previous project C, when the total work time using the bounding box tool is 800 sec. and when the total number of works is 50, the average work time is 16 sec. Furthermore, because the number of returns is 25, the work time of the returned work data is 400 sec. which are a value obtained by multiplying the average work time by the number of the returns. Thus, the total work time using the bounding box tool in previous project C (i.e., the work time considering the number of returns) is 1200 sec.

Furthermore, in previous project D, when the total work time using the bounding box tool is 600 sec. and when the total number of works is 12, the average work time is 50 sec. Furthermore, because the number of returns is 3, the work time of the returned work data is 150 sec. which are a value obtained by multiplying the average work time by the number of the returns. Thus, the total work time using the bounding box tool in previous project D (i.e., the work time considering the number of returns) is 750 sec.

Thus, the average time when one work is performed using the bounding box tool is a value, obtained by dividing a value, obtained by adding the work time considering the number of returns in previous project A, the work time considering the number of returns in previous project C, and the work time considering the number of returns in previous project D, by a value, obtained by adding the total number of works in previous project A, the total number of works in previous project C, and the total number of works in previous project D, that is, 22.22 sec. (= (1650+1200+ 750)/(100+50+12)).

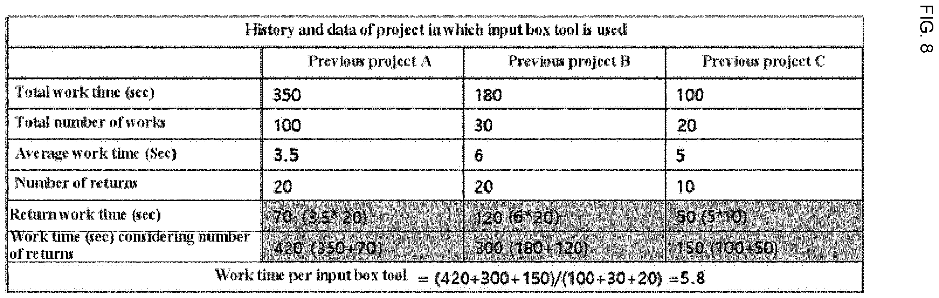

Referring to FIG. 8, history information of previous project A, previous project B, and previous project C for the input box tool may be extracted.

In previous project A, when the total work time when the input box tool is used is 350 sec. and when the total number of works is 100, the average work time is 3.5 sec. Furthermore, because the number of returns is 20, the work time of the returned work data is 70 sec. which are a value obtained by multiplying the average work time by the number of the returns. Thus, the total work time using the input box tool in previous project A (i.e., the work time considering the number of returns) is 420 sec.

Furthermore, in previous project B, when the total work time using the input box tool is 180 sec. and when the total number of works is 30, the average work time is 6 sec. Furthermore, because the number of returns is 20, the work time of the returned work data is 120 sec. which are a value obtained by multiplying the average work time by the number of the returns. Thus, the total work time using the input box tool in previous project B (i.e., the work time considering the number of returns) is 300 sec.

Furthermore, in previous project C, when the total work time using the input box tool is 100 sec. and when the total number of works is 20, the average work time is 5 sec. Furthermore, because the number of returns is 10, the work time of the returned work data is 50 sec. which are a value obtained by multiplying the average work time by the number of the returns. Thus, the total work time using the input box tool in previous project C (i.e., the work time considering the number of returns) is 150 sec.

Thus, the average time when one work is performed using the input box tool is a value, obtained by dividing a value, obtained by adding the work time considering the number of returns in previous project A, the work time considering the number of returns in previous project B, and the work time considering the number of returns in previous project C, by a value, obtained by adding the total number of works in previous project A, the total number of works in previous project B, and the total number of works in previous project C, that is, 5.8 sec. (= (420+300+150)/(100+30+20)).

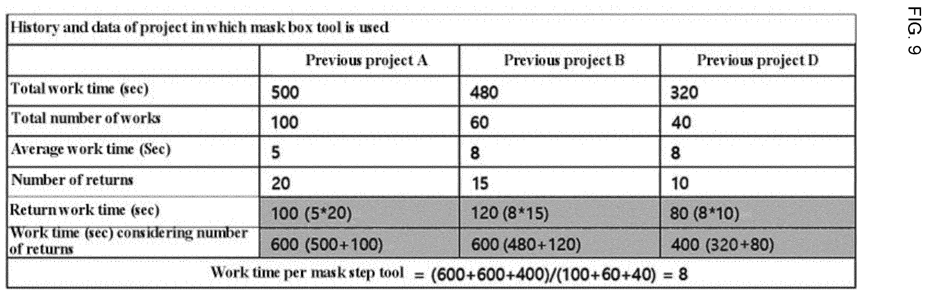

Referring to FIG. 9, history information of previous project A, previous project B, and previous project D for the make step tool may be extracted.

In previous project A, when the total work time when the make step tool is used is 500 sec. and when the total number of works is 100, the average work time is 5 sec. Furthermore, because the number of returns is 20, the work time of the returned work data is 100 sec. which are a value obtained by multiplying the average work time by the number of the returns. Thus, the total work time using the make step tool in previous project A (i.e., the work time considering the number of returns) is 600 sec.

Furthermore, in previous project B, when the total work time using the make step tool is 480 sec. and when the total number of works is 60, the average work time is 8 sec. Furthermore, because the number of returns is 15, the work time of the returned work data is 120 sec. which are a value obtained by multiplying the average work time by the number of the returns. Thus, the total work time using the make step tool in previous project B (i.e., the work time considering the number of returns) is 600 sec.

Furthermore, in previous project D, when the total work time using the make step tool is 320 sec. and when the total number of works is 40, the average work time is 8 sec. Furthermore, because the number of returns is 10, the work time of the returned work data is 80 sec. which are a value obtained by multiplying the average work time by the number of the returns. Thus, the total work time using the make step tool in previous project D (i.e., the work time considering the number of returns) is 400 sec.

Thus, the average time when one work is performed using the make step tool is a value, obtained by dividing a value, obtained by adding the work time considering the number of returns in previous project A, the work time considering the number of returns in previous project B, and the work time considering the number of returns in previous project D, by a value, obtained by adding the total number of works in previous project A, the total number of works in previous project B, and the total number of works in previous project D, that is, 8 sec. (= (600+600+400)/(100+60+40)).

Thereafter, referring again to FIG. 4, in operation S114, the server may add a work time per function tool to estimate a total work time taken every one piece of work data in the one new crowdsourcing-based project. In other words, the server may add an average work time of each function tool, which is generated based on previous project history information about each function tool, to measure a work time expected to perform the work of the new crowdsourcing-based project.

For example, when the new crowdsourcing-based project applies function tool 1, function tool 2, and function tool 3, when the average work time of function tool 1 is 22.22 sec., when the average work time of function tool 2 is 5.8 sec., and when the average work time of function tool 3 is 8 sec., the work time expected to be taken per one piece of work data in the new crowdsourcing-based project is 36 sec. (= 22.22+5.8+8). In other words, it may take 36 sec. on average to be performed per one piece of work data in the new crowdsourcing-based project.

Thereafter, in operation S115, the server may determine a unit cost of work in the new crowdsourcing-based project based on the total work time. In other words, the server may calculate the number of work data in the new crowdsourcing-based project, which is capable of performing a work per hour, based on the total work time taken per one piece of work data in the new crowdsourcing-based project, and may divide a predetermined wage per hour by the calculated number of work data in the new crowdsourcing-based project, which is capable of performing the work per hour, thus measuring a unit cost of work in the new crowdsourcing-based project.

For example, when it takes 36 sec. to be performed per one piece of work data in the new crowdsourcing-based project, the server may perform 100 works per hour. Thus, an appropriate unit cost of work is measured as 83 Won or 84 Won by dividing the predetermined wage per hour (e.g., 8350 Won) by 100.

The determined unit cost of work may be fixed until the new crowdsourcing-based project is ended and may be used to calculate a unit cost of inspection which is automatically updated every certain period in the project.

Referring again to FIG. 3, in operation S120, the server may open the new crowdsourcing-based project.

The server may determine the unit cost of work as described above and may open the new crowdsourcing-based project when completing the setting of the certain period for automatically updating the unit cost of inspection.

Before the first certain period is reached after the project is opened, the server may apply the fixed unit cost of work and the predetermined initial unit cost of inspection to pay a cost of work and a cost of inspection to the worker 32 and the inspector 34, respectively. For example, when the unit cost of work is determined as 100 Won and when the initial unit cost of inspection is preset to 50 Won, the server may apply the unit cost of work of 100 Won to pay a cost of work to the worker 32 who completes the work during a duration before the first certain period is reached and may apply the initial unit cost of inspection of 50 Won to pay a cost of inspection to the inspector 34 who completes the inspection during the duration before the first certain period is reached.

After the first certain period is reached, the server may maintain the unit cost of work without change to pay a cost of work to the worker 32 and may automatically update the unit cost of inspection every certain period and may apply the changed unit cost of inspection to pay a cost of inspection to the inspector 34.

Thereafter, in operation S130, the server may measure a work time and an inspection time for each piece of work data during the certain period.

Referring to FIG. 10, n pieces of work data may be assigned to the crowdsourcing-based project. In other words, the work data may be assigned to the corresponding project by a number the client 10 who commissions the project wants to collect. A data ID may be assigned to each piece of work data, and the work data may be assigned to the worker and the inspector in order. The server may assign each piece of work data to the worker 32 and the inspector 34 to allow the worker 32 and the inspector 34 to perform a work and an inspection and may measure a work time and an inspection time for each piece of work data. Herein, the work time indicates a time taken for the worker 32 to work the corresponding work data, and the inspection time indicates a time taken for the inspector 34 to inspect the corresponding work data.

As an embodiment, when the certain period is set to a specific time, the server may measure a work time and an inspection time for each piece of work data during the specific time. For example, when the certain period is set to 3 hours, the server may measure a work time and an inspection time of each of pieces of work data, the work of which is completed by the worker 32 and the inspection of which is completed by the inspector 34 for 3 hours.

Referring to FIG. 11, when the work and the inspection of four pieces of work data are completed during a first period (3 hours) and a second period (6 hours), the work time and the inspection time of each piece of work data may be measured and stored by the server. FIG. 11 illustrates that the work and the inspection of the same number of work data are completed during the first period and the second period. However, the number of work data completed per period may be different depending on several project situations such as quality of the worker and quality of the inspector.

As another embodiment, when the certain period is set to a time point when the work and the inspection of a specific number of work data are completed, the server may measure a work time and an inspection time of each of a specific number of work data at the time point when the work and the inspection of the corresponding number of work data are completed. For example, when the certain period is set to four, the server may measure a work time and an inspection time of each of pieces of work data, up to a time point when the work and the inspection of four pieces of work data are completed.

Referring to FIG. 11, the server may measure and store a work time and an inspection time of four pieces of work data during the first period (3 hours) and the second period (6 hours).

Referring again to FIG. 3, in operation S140, the server may calculate the ratio of the inspection time to the work time for each piece of work data. In operation S150, the server may calculate an average value of the ratio of the inspection time to the work time, which is calculated for each piece of work data.

The server may calculate the ratio of an inspection time to a work time of each piece of work data using the work time and the inspection time, which are measured and stored for each piece of work data during the certain period, and may calculate an average value of the ratio of the inspection time to the work time of each piece of work data measured during the certain period.

Referring to FIG. 11, the ratio of the inspection time to the work time of each of four pieces of work data (1001, 1002, 1003, and 1004) completed during a first period may be calculated as 0.30, 0.25, 0.22, or 0.25, and the average value of the ratio of the inspection time to the work time of each piece of work data measured during the first period may be calculated as 0.26.

Thereafter, the ratio of the inspection time to the work time of each of four pieces of work data (1005, 1006, 1007, and 1008) completed during a second period may be calculated as 0.40, 0.50, 0.25, or 0.50, and the average value of the ratio of the inspection time to the work time of each piece of work data measured during the second period may be calculated as 0.41.

It may be seen that the average value of the ratio during the second period is calculated as being greater than the average value of the ratio during the first period from the result.

In other words, referring to FIG. 11, when comparing the first period with the second period, it may be seen that the work time for each piece of work data is shorter in the second period than that in the first period, whereas the inspection time is longer in the second period than that in the first period. This means that it is more difficult for the inspector to perform the inspection during the second period than the first period. Thus, it is very important to adjust a unit cost of inspection every certain period depending on the average value calculated by reflecting such a result.

In operation S160, the server may automatically update a unit cost of inspection using the unit cost of work and the calculated average value.

The server may set the average value calculated every certain period to the unit cost R of inspection compared to the unit cost of work and may automatically update the unit cost of inspection depending on the R value.

Referring to FIG. 12, as an initial R value is set to 0.5 according to a fixed unit cost of work and a predetermined initial unit cost of inspection and as the average value of 0.26 calculated at a time point when the first period is reached is reset to the R value, the server may update the unit cost of inspection to 26 Won. Thereafter, up to a time point when the second period is reached, the server may apply a fixed unit cost of work (100 Won) and an updated unit cost of inspection (26 Won) to pay a cost of work and a cost of inspection to the worker 32 and the inspector 34.

Thereafter, as the average value of 0.41 calculated at a time point when the second period is reached is reset to the R value, the server may update the unit cost of inspection to 41 Won. Thereafter, up to a time point when the third period is reached, the server may apply a fixed unit cost of work (100 Won) and an updated unit cost of inspection (41 Won) to pay a cost of work and a cost of inspection to the worker 32 and the inspector 34.

In other words, by automatically updating the unit cost of inspection depending on the average value calculated every period in a state where the unit cost of work is fixed to an ideal value, the server may reflect a progress situation of the project to efficiently pay a cost of inspection to the inspector.

Meanwhile, as an embodiment, the method for automatically updating the unit cost of inspection by using the comparison between the inspection time and the working time of the crowdsourcing-based project of the inventive concept may further include calculating the ratio of a unit cost of inspection to a unit cost of work. At this time, when comparing the calculated ratio R of the unit cost of inspection to the unit cost of work with the average value of the ratio of the inspection time to the working time, the server may automatically update a unit cost of inspection when a deviation between the two values deviates from a reference numerical range.

In other words, when the R value is set to 0.5 and when the reference numerical value is set to 0.1, as the work and the inspection of each piece of work data are completed, the server may calculate the ratio of an inspection time to a work time of each piece of work data and may update an average value of a plurality of ratios. At this time, the server may automatically increase or decrease and adjust the unit cost of inspection at a time point when a deviation between the updated average value and the R value is greater than 0.1.

Meanwhile, in the above-mentioned description, operations S110 to S160 may be further divided into additional operations or may be combined into fewer operations, according to an implementation example of the inventive concept. Furthermore, some operations may be omitted if necessary, and an order between operations may be changed. In addition, although there are other omitted contents, the above-mentioned contents of FIG. 13 described below are also applicable to the method for automatically updating the unit cost of inspection by using the comparison between the inspection time and the working time of the crowdsourcing-based project in FIGS. 1 to 12.

Hereinafter, a description will be given of an apparatus 200 for automatically updating a unit cost of inspection by using a comparison between an inspection time and a work time of a crowdsourcing-based project according to an embodiment of the inventive concept.

FIG. 13 is a block diagram of an apparatus for automatically updating a unit cost of inspection by using a comparison between an inspection time and a work time of a crowdsourcing-based project according to an embodiment of the inventive concept.

Referring to FIG. 13, an apparatus 200 for automatically updating a unit cost of inspection by using a comparison between an inspection time and a work time of a crowdsourcing-based project (hereinafter referred to as an "inspection unit cost update apparatus") may include a communication module 210, a memory 220, and a processor 230.

The communication module 210 may transmit crowdsourcing-based works for one project to a plurality of workers 32 to request the plurality of workers 32 to perform the works and may receive the work results from the plurality of workers 32. Furthermore, the communication module 210 may transmit the work results, received from the plurality of workers 32, to a plurality of inspectors 34 to request the plurality of inspectors 34 to inspect the work results and may receive inspection results from the plurality of inspectors 34.

The memory 220 may store a computer program for updating a unit cost of inspection every certain period based on the data received from the communication module 210.

The processor 230 may execute the computer program stored in the memory 220. The computer program may store instructions for executing the above-mentioned method for automatically updating the unit cost of inspection by using the comparison between the inspection time and the work time of the crowdsourcing-based project. As executing the program stored in the memory 220, the processor 230 may measure a work time and an inspection time per each piece of work data assigned to the project to calculate the ratio of the inspection time to the work time and may calculate an average value of the ratio of the inspection time to the work time of each piece of work data every certain period, thus updating the unit cost of inspection every certain period.

The inspection unit cost update apparatus 200 described with reference to FIG. 13 may be provided as a component of the above-mentioned server.

The above-mentioned method for automatically updating the unit cost of inspection by using the comparison between the inspection time and the work time of the crowdsourcing-based project according to an embodiment of the inventive concept may be combined with a computer which is hardware and may be stored in a computer-readable storage medium to be implemented as a program (or application) to be executed.

For the computer to read the program and execute the methods implemented with the program, the above-mentioned program may include a code coded into a computer language such as C, C++, Java, or a machine language readable through a device interface of the computer by a processor (CPU) of the computer. Such a code may include a functional code associated with a function and the like defining functions necessary for executing the methods and may include a control code associated with an execution procedure necessary for the processor of the computer to execute the functions according to a procedure. Further, such a code may further include a code associated with memory reference about whether additional information or media necessary for the processor of the computer to execute the functions is referred at any location (address number) of an internal or external memory of the computer. Further, if it is necessary for the processor of the computer to communicate with any computer or server located in a remote place to execute the functions, the code may further include a communication related code about how communication is performed with any computer or server located in a remote place using a communication module of the computer and whether to transmit and receive any information or media upon communication.

The medium may refer to a device-readable medium which stores data on a semipermanent basis rather than a medium, such as a register, a cache, or a memory, which stores data during a short moment. The medium may refer to a device-readable medium which stores data on a semipermanent basis rather than a medium, such as a register, a cache, or a memory, which stores data during a short moment. In other words, the program may be stored in various storage media on various servers accessible by the computer or various storage media on the computer of the user. Further, the medium may be distributed to a computer system connected over a network and may store a computer-readable code on a distributed basis.

While the inventive concept has been described with reference to exemplary embodiments, it will be apparent to those skilled in the art that various changes and modifications may be made without departing from the spirit and scope of the inventive concept. Therefore, the embodiments described above are provided by way of example in all aspects, and should be construed not to be restrictive.

## Claims

1. A method for automatically updating a unit cost of inspection by using a comparison between an inspection time and a work time of a crowdsourcing-based project, the method being implemented by a computer and comprising:
determining a unit cost of work and a unit cost of inspection in a new crowdsourcing-based project;
applying the unit cost of work and the unit cost of inspection to open the new crowdsourcing-based project;
measuring a work time and an inspection time for each piece of work data during a certain period;
calculating the ratio of the inspection time to the work time for each piece of work data;
calculating an average value of the ratio of the inspection time to the work time calculated for each piece of work data; and
automatically updating the unit cost of inspection using the unit cost of work and the calculated average value.

2. The method of claim 1, wherein the determining of the unit cost of work includes:
identifying a plurality of function tools to be applied to work data of the new crowdsourcing-based project;
extracting history information of a previous crowdsourcing-based project in which the plurality of function tools are used;
calculating respective working times when the plurality of function tools are used, based on the history information;
estimating a work time for each one piece of work data of the new crowdsourcing-based project using the sum of the respective work times when the plurality of function tools are used; and
determining the unit cost of work using the estimated work time.

3. The method of claim 2, wherein the history information includes at least one of a total work time when the corresponding function tool is used in the previous crowdsourcing-based project, the total number of works, an average work time, the number of returns, a work time of returned work data, and a work time considering the number of the returns.

4. The method of claim 3, wherein the work time when the function tool is used is measured using a start time when the corresponding function tool is used and an end time when the corresponding function tool is used.

5. The method of claim 3, wherein the work time of the returned work data is calculated using the product of the number of the returns and the average work time.

6. The method of claim 3, wherein the work time considering the number of the returns is calculated using the sum of the total work time and the work time of the returned work data.

7. The method of claim 2, wherein, when the previous crowdsourcing-based project in which a specific function tool is used is n (where n is a natural number) in number, the work time when the specific function tool is used is calculated using a value (a/b) obtained by dividing the sum (a) of work times considering the number of returns of the n previous crowdsourcing-based projects by the sum (b) of the total number of works of the n previous crowdsourcing-based projects.

8. The method of claim 2, wherein the determining of the unit cost of work using the estimated working time includes:
estimating the number of work data capable of being performed per hour in the new crowdsourcing-based project using the estimated work time; and
determining the unit cost of work using a value obtained by dividing a standard wage per hour by the estimated number of the work data capable of being performed per hour.

9. The method of claim 1, further comprising:
calculating the ratio of the unit cost of inspection to the unit cost of work,
wherein the automatic updating of the unit cost of inspection includes:
automatically updating the unit cost of inspection, when a deviation between the average value of the ratio of the inspection time to the work time and the ratio of the unit cost of inspection to the unit cost of work deviates from a reference numerical range.

10. A computer program being combined with a computer and being stored in a computer-readable storage medium to perform the method for automatically updating the unit cost of inspection by using the comparison between the inspection time and the work time of the crowdsourcing-based project of any one of claims 1-9.
